# EUROPÄISCHE PATENTSCHRIFT

(11) **EP 0 643 911 B1**
(45) Veröffentlichungstag und Bekanntmachung des Hinweises auf die Patenterteilung: **14.08.1996**
(21) Anmeldenummer: 94113987.5
(22) Anmeldetag: 07.09.1994
(51) Int. Cl.: A01K 31/08

(54) **Zerlegbarer Käfig**
Collapsible cage
Cage démontable

(30) Priorität: 16.09.1993 DE 9314021 U
(43) Veröffentlichungstag der Anmeldung: 22.03.1995
(73) Patentinhaber: Wagner & Keller GmbH & Co., 71638 Ludwigsburg (DE)
(72) Erfinder: Braun, Hans, Dipl.-Wi.-Ing., D-71634 Ludwigsburg (DE)
(74) Vertreter: Dreiss, Fuhlendorf & Steimle Patentanwälte

(56) Entgegenhaltungen:
- DE-A- 3 007 920
- DE-A- 3 212 750
- FR-A- 2 291 701

## Beschreibung

Die Erfindung bezieht sich auf einen zerlegbaren Käfig, bestehend aus einer Wanne, darin mit ihren unteren Enden eingreifenden Seitenwänden sowie vorzugsweise einem Deckel, wobei die winklig zueinander angeordneten Seitenwände über seitliche Käfigecken bildende Profilschienen miteinander verbunden sind und vorzugsweise aus jeweils einem Drahtgitter bestehen.

Ein solcher Käfig ist beispielsweise aus der FR-A-2 291 701 bekannt.

Käfige, insbesondere größere Käfige für große Vögel, Hasen oder eine Vielzahl kleinerer Tiere nehmen sowohl bei der Lagerhaltung als beim Versand verhältnismäßig viel Raum ein. Um nun Lagerraum einzusparen bzw. kleinere Versandeinheiten zu bekommen, wurde bereits vorgeschlagen, Käfige zerlegbar auszubilden, wobei sie dann in zerlegtem Zustand nur einen Bruchteil, beispielsweise nur ein Viertel bis ein Fünftel des Raumes benötigen, den der aufgebaute Käfig einnimmt.

Der Käufer erwirbt normalerweise den Käfig in zerlegtem Zustand, so daß auch er nur eine kleine Transporteinheit vorfindet. Andererseits muß er aber den Käfig zuhause zusammenbauen. Dies muß ohne großen technischen Sachverstand und ohne besondere Werkzeuge möglich sein. Aus diesem Grunde wurde beispielsweise in der FR-A-2 291 701 vorgeschlagen, daß bei einem quaderförmigen Käfig mit vier seitlichen Käfigecken jede durch eine Profilschiene gebildet wird, wobei man dann einander zugewandte, im Gebrauch vertikale Seitenkanten bzw. außen liegende Drahtgitter-Randbereiche in Längsrichtung der Profilschienen in diese einschiebt. Die Profilschiene hat dabei für jeden der beiden seitlichen Drahtgitter-Randbereiche eine Aufnahmenut. Diese muß aber so beschaffen und an den seitlichen Drahtgitter-Randbereich angepaßt werden, daß dieser in horizontaler Richtung nicht herausgezogen werden kann. Hierbei muß berücksichtigt werden, daß der seitliche Drahtgitter-Randbereich aus mindestens einem vertikalen Gitterstab und einer Mehrzahl daran angeschweißter horizontaler Drahtgitterstäbe bestehen kann. Gerade diese Ausbildung der beiden Randbereiche führt bei dem bekannten zerlegbaren Käfig dazu, daß die beiden Wände nur sehr schwer und unter Aufbietung von Kraft in die Profilschienen eingeschoben werden können. Man könnte zwar die Nut weiter machen, jedoch hätte dies den Nachteil, daß dann die Stabilität des Käfigs vollständig verlorengeht. Diese Art der Montage ist für Laien an sich nicht geeignet.

Es liegt deshalb die Aufgabe vor, einen zerlegbaren Käfig der eingangs beschriebenen Art so weiterzubilden, daß die an sich vorteilhaften Profilschienen beibehalten werden können, jedoch die Verbindung mit den Seitenwand-Randbereichen, insbesondere den Drahtgitter-Randbereichen einfacher vonstatten geht, ohne daß deshalb die Festigkeit des fertigen Käfigs darunter leidet.

Zur Lösung dieser Aufgabe wird erfindungsgemäß vorgeschlagen, daß der zerlegbare Käfig mit den Oberbegriffsmerkmalen des Anspruchs 1 gemäß dem kennzeichnenden Teil dieses Anspruchs ausgebildet ist. Weil nunmehr die Profilschienen zweigeteilt sind, können die beiden Randbereiche der benachbarten Drahtgitter problemlos in ihre Aufnahmenut der Profilschiene eingebracht werden, ohne daß es hierzu einer Kraftanstrengung bedarf. Dabei ist es sehr vorteilhaft, daß die beiden Profilschienenteile mit Hilfe der Spreizvorrichtung auseinandergedrückt werden, so daß bei maximal geöffneten Spanneinrichtungen stets die maximal weite Nut zum Einbringen des Drahtgitter-Randbereichs zur Verfügung steht, ohne daß es hierzu einer besonderen Manipulation oder spezieller Werkzeuge bedarf. Die Käfigseitenwände können auf diese Weise miteinander verbunden werden, jedoch fehlt es dann zunächst noch an einer für den Gebrauch ausreichenden Steifigkeit und Stabilität. Diese erreicht man aber auf einfache Art und Weise durch das Schließen oder Festziehen der Spanneinrichtungen, mit deren Hilfe man die beiden Profilschienenteile fest gegeneinanderzieht unter Einspannung der eingreifenden Seitenwand-Randbereiche. Die derart gebildete Einheit aus den normalerweise vier Seitenwänden und den Profilschienen stellt man anschließend in die Wanne, mit der sie in bekannter Weise verbunden werden kann. Außerdem kann noch ein Deckel oder Dach angebracht werden.

Kleine Tiere benötigen nicht nur einen kleineren Käfig, vielmehr reicht für sie ein Drahtgitter mit dünneren Stäben aus. Man kann nun die Spanneinrichtungen so ausgestalten, daß sie in der Lage sind, Drahtgitter unterschiedlicher Drahtstärke klemmend festzuhalten. Im übrigen richtet sich selbstverständlich die Anzahl der Spanneinrichtungen pro Profilschiene nach deren Länge. Somit sind die Profilschienen recht universell verwendbar, und man kann hierzu beispielsweise Abschnitte von Meterware verwenden. Zweckmäßigerweise sind sie aus Kunststoff gefertigt.

Eine Weiterbildung der Erfindung sieht vor, daß die beiden Profilschienenteile und die Spanneinrichtungen unverlierbar zusammengehalten sind. Alle zusammen bilden eine Montageeinheit. Das Zusammenhalten erfolgt selbstverständlich über die Spanneinrichtungen, die sich jedoch wegen der Spreizfedern vor der Verbindung der Montageeinheit mit den Seitenwänden in maximal geöffnetem Zustand befinden. Es sind verschiedene Möglichkeiten bekannt, zwei Teile, also im speziellen Fall die beiden Teile der Spanneinrichtung, unverlierbar zu verbinden, nämlich beispielsweise eine schnappende oder eine rastende Verbindung.

Eine weitere Ausgestaltung der Erfindung ist dadurch gekennzeichnet, daß jede Spreizvorrichtung durch wenigstens eine Spreizfeder gebildet ist und die Profilschienenteile gegen den Widerstand der wenigstens einer Spreizfeder an die Randbereiche der Seitenwände anpreßbar sind. Beim Einspannen der Seitenwände werden die Spreizfedern gespannt oder, falls sie unter Vorspannung stehen, stärker gespannt. Wenn man später, um den Käfig zu zerlegen, die Spannvorrichtungen löst, so drücken die Spreizfedern die beiden Profilschienenteile auseinander, und man kann anschließend die Seitenwände aus dem Spaltraum zwischen den beiden Profilschienenteilen leicht herausnehmen.

Eine weitere Ausgestaltung der Erfindung ist dadurch gekennzeichnet, daß die Spreizfedern einstückig mit ihrem Profilschienenteil hergestellt und als verschwenkbare Zungen ausgebildet sind. Gerade bei Kunststoffertigung bieten sich vielfältige Möglichkeiten der einstückigen Fertigung, wodurch sich der Montageaufwand verringert. Im übrigen kann man die Spreizfedern an jedem der beiden Profilschienenteile anformen. Es ist lediglich darauf zu achten, daß sie nach der Verbindung der beiden Spanneinrichtungsteile ihre Kraft entfalten und die beiden Profilschienenteile auseinanderdrücken können.

Eine erste Ausbildungsvariante ergibt sich aus Anspruch 5. Der Bügelrücken steht dabei so weit vor, daß er nach dem Verbinden der beiden Spanneinrichtungsteile vom anderen Profilschienenteil niedergedrückt und dadurch seine Spreizkraft erzeugt wird.

Eine andere Variante der Spreizfedergestaltung beschreibt Anspruch 6. Sie bietet Vorteile beim Herstellen des die Spreizfedern aufweisenden Profilschienenteils aus Kunststoff.

Eine besonders bevorzugte Ausführungsform der Erfindung geht aus Anspruch 7 hervor. Die Dimensionierung der Querschnitte ist so gewählt, daß die freien C-Schenkelenden gegen die beiden Trapezflächen des inneren Profilschienenteils weisen, so daß im Spaltraum zwischen beiden der Randbereich, insbesondere die horizontalen Stäbe der Drahtgitterwände eingeklemmt werden können. Man kann die Profilgestaltung so vornehmen, daß im genannten Falle nur die horizontalen Stäbe, nicht jedoch der randäußere vertikale Stab geklemmt wird. Dies eröffnet nämlich die Möglichkeit für letzteren unterschiedliche Drahtstärken vorzusehen, so daß hinsichtlich der Drahtstärken ein verhältnismäßig großer Spielraum vorliegt.

Zweckmäßigerweise wird der mittlere Bereich des C-Querschnitts innen verstärkt, wobei der Querschnitt der Verstärkung etwa trapezförmig ist. Die beiden Trapeze weisen mit ihren kleineren parallelen Flächen gegeneinander. Es ist insbesondere vorgesehen, daß sich selbst bei maximal gespannten Spanneinrichtungen die beiden parallelen, kleineren Trapezflächen nicht berühren. Hierdurch ist ein kontinuierliches Spannen der Spanneinrichtungen bis zur maximalen Betätigung möglich.

Eine Weiterbildung der Erfindung ergibt sich aus Anspruch 9. Die Spanneinrichtung besitzt dabei vor der unverlierbaren Verbindung lediglich ein einziges loses Teil, nämlich das Drehteil mit dem Kopf und dem mindestens einen radial vorstehenden Nocken. Das andere Teil jeder Spanneinrichtung befindet sich dabei am inneren Profilschienenteil und ist damit in sehr vorteilhafter Weise einstückig gefertigt, wodurch sich die Teilezahl verringert und die Kosten reduziert werden. Durch das Untergreifen der Aufgleitfläche durch einen bzw. jeweils einen Nocken ergibt sich die erwähnte unverlierbare Verbindung der Spanneinrichtungen mit der betreffenden Profilschiene bzw. in diesem Falle des Drehteils mit der Profilschiene. Eine besonders bevorzugte weitere Ausgestaltung der Spanneinrichtung beschreibt Anspruch 10. Das Drehteil wird durch eine Bohrung des äußeren Profilschienenteils hindurchgesteckt, welches einen Durchbruch aufweisen muß, der das ungehinderte Hindurchschieben, nicht nur des Schafts, sondern auch der an dessen freiem Ende radial vorstehenden Nocken gestattet. Wenn aber letztere in die Einsteckschlitze des inneren Profilschienenteils gelangen, so ist das weitere Einschieben des Drehteils nur unter Aufwendung einer Verrastkraft möglich, wobei ein federelastisches Nachgeben in diesem Bereich erforderlich ist. Letzteres läßt sich dadurch auf einfache Art und Weise gewährleisten, daß das Drehteil dann eingedrückt wird, wenn das innere Profilschienenteil warm genug und somit ausreichend nachgiebig ist. Nach dem Verrasten kann das Drehteil ohne Beschädigungsgefahr nicht mehr herausgezogen werden, und somit ist die angestrebte unverlierbare Verbindung aller Drehteile mit dem inneren Profilschienenteil unter Zwischenschaltung des äußeren Profilschienenteils gewährleistet, welches durch die Köpfe der Drehteile gehalten wird.

Jede wendelförmige Aufgleitfläche geht in sehr vorteilhafter Weise stetig in die Abstützfläche für den eingerasteten Nocken über. Wenn man also die beiden seitlichen Drahtgitter-Randbereiche in die beiden vorzugsweise einen Winkel von 90° miteinander einschließenden Aufnahmeschlitze der Profilschiene eingeschoben hat, so bewirkt ein Drehen jedes Drehteils automatisch das Aufgleiten seines oder seiner Nocken an der zugeordneten, wendelförmigen Aufgleitfläche und als Folge davon eine Annäherung des inneren Profilschienenteils an das äußere unter gleichzeitigem Einspannen der beiden Randbereiche der winklig zueinander stehenden Seitenwände.

Zweckmäßigerweise wird der Kopf jedes Drehteils gemäß Anspruch 12 zumindest teilweise versenkt im äußeren Profilschienenteil untergebracht.

Weil jeder Laie, beispielsweise auch jedes Kind, in der Lage sein soll, diesen Käfig aufzubauen, ist es notwendig, daß für den Zusammenbau kein spezielles Werkzeug erforderlich ist. Dies ist dann gewährleistet, wenn das Drehteil gemäß Anspruch 13 weitergebildet ist. Eine Münze mit deren Hilfe man das Drehteil um den vorgesehenen Drehwinkel, der beispielsweise in der Größenordnung von 90° liegen kann, ist immer vorhanden und deshalb kann die Montage von jedermann vorgenommen werden. Anstelle eines einfachen Schlitzes kann auch ein Kreuzschlitz vorgesehen sein. Die Einstecktiefe ist so zu wählen, daß mit der Münze die notwendige Kraft aufgebracht werden kann, ohne daß der Schlitz ausreißt.

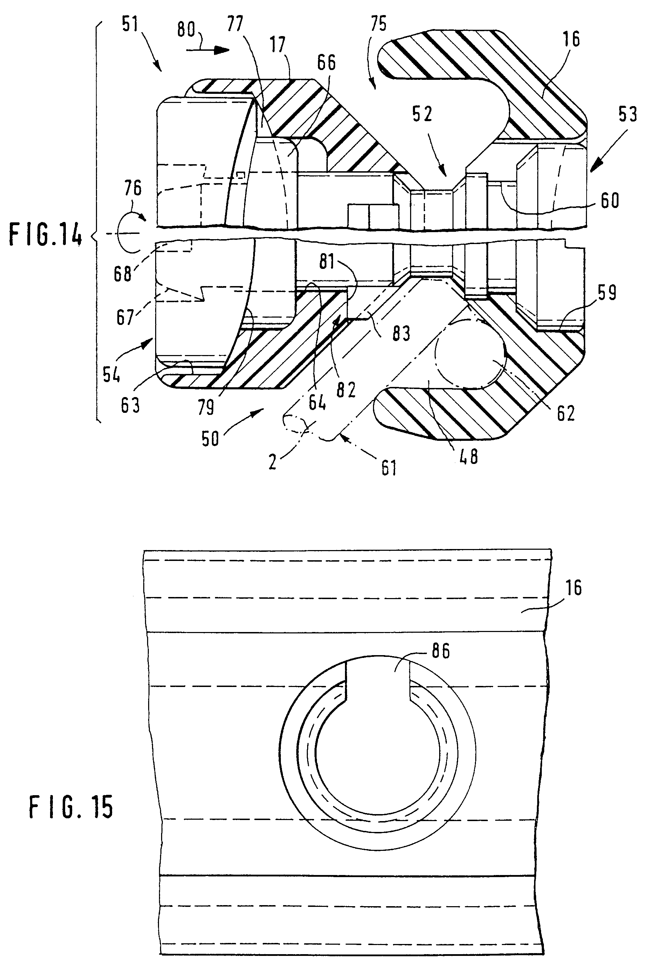

Eine weitere sehr vorteilhafte Variante der Erfindung ergibt sich aus den Figuren 14 bis 23. Während bei der vorstehend beschriebenen Ausführungsform die Spreizvorrichtung, welche bei entsprechender Freigabe das äußere und das innere Profilschienenteil auseinanderdrückt durch jeweils eine Spreizfeder gebildet ist, wird beim Ausführungsbeispiel der Figuren 14 und folgende das Aufspreizen mit einer Spreizvorrichtung bewirkt, die auf eine Federkraft verzichtet und statt dessen die Aufspreizbewegung über eine Drehbewegung des Drehglieds herbeiführt. Das Drehglied hat infolgedessen hier eine doppelte Aufgabe, nämlich einmal einen Teil der Spanneinrichtung zu bilden und andererseits auch noch einen Teil der Spreizvorrichtung. Man erreicht das Spreizen, indem man das Drehglied genau in entgegengesetzter Richtung dreht als beim Spannen. Dieses zwangsweise Spreizen wird mit absoluter Sicherheit durchgeführt, während bei Verwendung einer Spreizfeder das Aufspreizen dann nicht mehr gewährleistet ist, wenn die Feder erlahmt oder gebrochen ist. Trotzdem ist der technische Aufwand bei der Variante nach den Figuren 14 und folgende nicht größer als bei den anderen Ausführungsbeispielen.

Hinsichtlich der speziellen Ausbildung dieser federlosen Konstruktion wird auf die nachfolgende Beschreibung des betreffenden Ausführungsbeispiels verwiesen, mit der ausdrücklichen Anmerkung, daß alle diesbezüglichen Erläuterungen erfindungswesentlich sind. Außerdem ist diese Variante mit den Merkmalen jedes einzelnen oder mehrerer der Ansprüche 2, 7, 8, 14 oder 16 beliebig kombinierbar.

Weitere Ausgestaltungen dieses zerlegbaren Käfigs ergeben sich aus den Unteransprüchen sowie der nachfolgenden Beschreibung von Ausführungsbeispielen.

Die Zeichnung zeigt diese Ausführungsbeispiele der Erfindung. Hierbei stellen dar:
- Figur 1: perspektivisch den zusammengebauten Käfig;

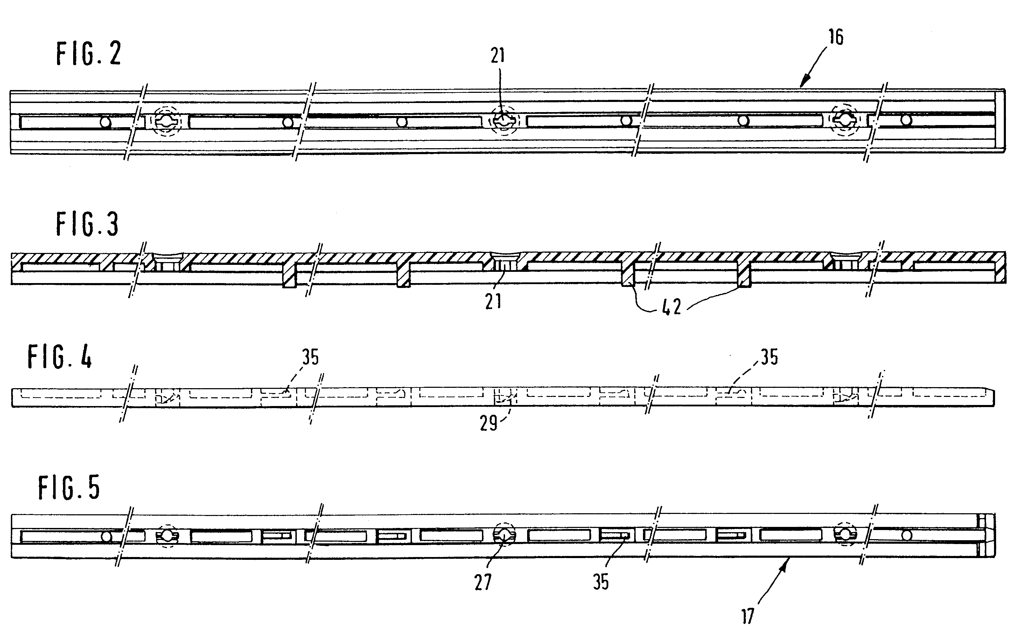

- Figur 2: eine Draufsicht auf das äußere Profilschienenteil;
- Figur 3: einen Längsschnitt durch das äußere Profilschienenteil;
- Figur 4: einen Längsschnitt durch das innere Profilschienenteil;
- Figur 5: eine Draufsicht auf das innere Profilschienenteil;
- Figur 6 bis 9: in vergrößertem Maßstab Ausschnitte aus den Figuren 2 bis 5;
- Figur 10: in noch stärkerer Vergrößerung einen Querschnitt durch die Profilschiene mit eingeklemmten Randbereichen benachbarter Seitenwände;
- Figur 11: eine teilweise aufgebrochene Seitenansicht des Drehteils der Spanneinrichtung;
- Figur 12: einen Schnitt gemäß der Linie XII-XII der Figur 11;
- Figur 13: in vergrößertem Maßstab eine zweite Ausführungsform der Spreizfeder;
- Figur 14: eine der Figur 10 entsprechende Darstellung mit einer zweiten Variante der Spreizvorrichtung;
- Figur 15: eine abgebrochene Draufsicht auf die Außenseite der Profilschiene der Figur 14;
- Figur 16: eine Draufsicht auf das größere Teil des zweiteiligen Drehglieds;
- Figur 17: eine Seitenansicht des größeren Drehgliedteils;
- Figur 18: ein Schnitt durch das kleinere Teil des zweiteiligen Drehglieds;
- Figur 19: eine Stirnansicht der Figur 18;
- Figur 20: eine Seitenansicht des kleinen Drehgliedteils;
- Figur 21: einen quer zur Längsachse gelegten Schnitt durch das innere Profilschienenteil gemäß Figur 14;
- Figur 22: eine abgebrochene Draufsicht auf das innere Profilschienenteil;
- Figur 23: einen abgebrochenen Längsschnitt durch die Mitte des inneren Profilschienenteils, wobei die Figuren 21 bis 23 einen etwas kleineren Maßstab aufweisen als die Figuren 14 bis 20.

Der zerlegbare Käfig besteht aus der Wanne 1, den vier rechtwinklig zueinander angeordneten Seitenwänden 2 bis 5 sowie dem Deckel 6. Jeweils zwei benachbarte Seitenwände sind über eine Profilschiene miteinander verbunden. Im einzelnen verbindet die Profilschiene 7 den linken seitlichen Randbereich der Seitenwand 2 und den in der Draufsicht rechten seitlichen Randbereich der Seitenwand 3. Die Profilschiene 8 dient zur Verbindung der zugeordneten Randbereiche der Seitenwände 3 und 4, während die Profilschiene 9 die zugeordneten Randbereiche der Seitenwände 4 und 5 verbindet. Schließlich dient die Profilschiene 10 zur Verbindung der Randbereiche der Seitenwände 2 und 5.

Die Wanne 1 ist vorteilhafterweise aus Kunststoff gefertigt, und sie kann mit einem äußeren umlaufenden Rand 11 versehen sein, welcher den unteren Randbereich der aus den vier Seitenwänden und den Profilschienen gebildeten Einheit aufnimmt und abstützt. Nicht näher dargestellte, als solche jedoch bekannte Verschlußelemente 12 sorgen für eine feste, aber lösbare Verbindung dieser Einheit mit der Wanne 1. Die Seitenwände der Wanne sind nach außen hin abgekröpft, so daß ein abgwinkelter, umlaufender Rand 11 gebildet wird, auf welchem sich die Einheit abstützen kann und gegen welche sie mit Hilfe der Verschlußelemente gezogen wird.

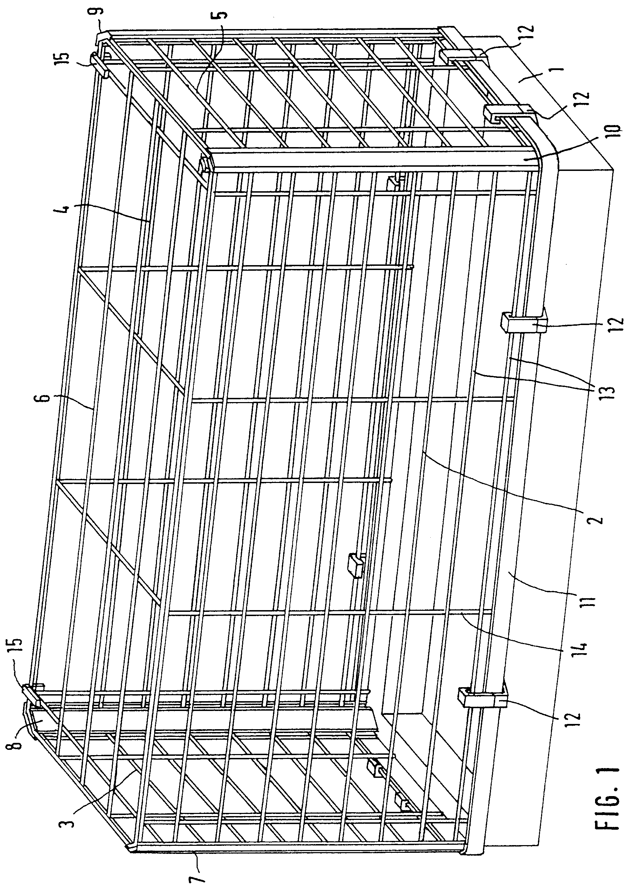

Jede Seitenwand 2 besteht bei den Ausführungsbeispielen aus einem Drahtgitter, welches in an sich bekannter Weise aus horizontalen Stäben 13 und vertikalen Stäben 14 hergestellt sein kann. Der Deckel 6 kann gleichfalls aus einem Drahtgitter bestehen. Er ist in nicht näher gezeigter Weise mittels Scharnieren 15 an einer der vier Seitenwände, beispielsweise der Seitenwand 4, angelenkt, wobei die Darstellung der Figur 1 insoweit nur schematisch zu verstehen ist. Als "Scharniere" reichen einfache, den oberen horizontalen Stab 13 der Wand 4 umfassende geschlossene Haken aus. Die Verbindung mit den übrigen drei Seitenwänden kann ebenfalls in bekannter Weise vorgenommen werden. Hierauf kommt es im Zusammenhang mit der erfindungsgemäßen Ausbildung der Einheit aus den vier Seitenwänden und den vier Profilschienen nicht an.

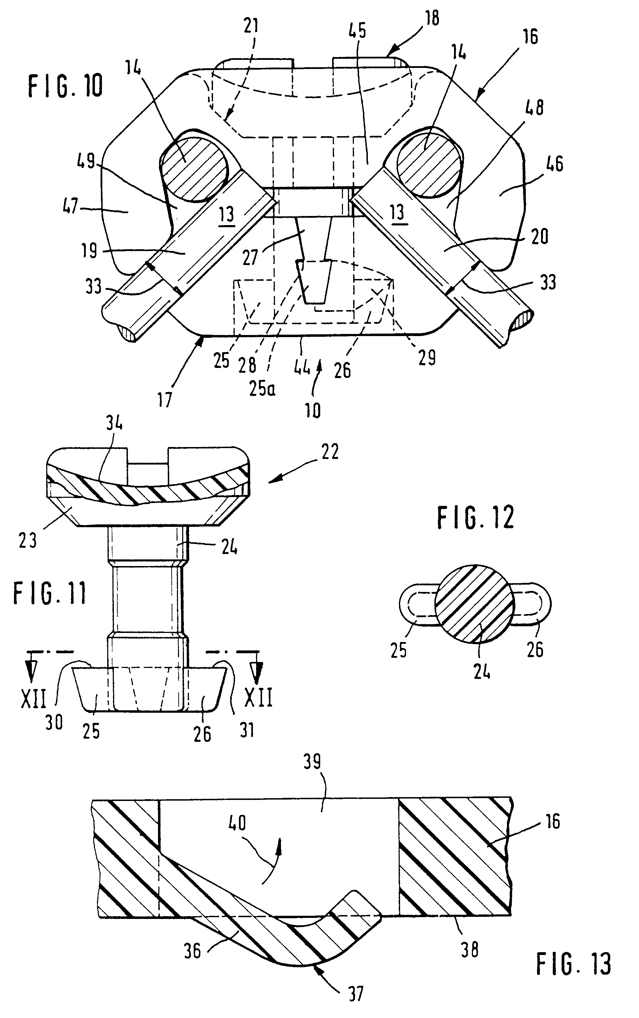

Jede Profilschiene 7 bis 10 besteht aus einem äußeren Profilschienenteil 16 und einem inneren Profilschienenteil 17. Diese können mittels mehrerer, in Längsrichtung versetzter Spanneinrichtung 18 unter Zwischenschaltung benachbarter seitlicher Drahtgitter-Randbereiche 19 und 20 (Figur 10) zweier in Umfangsrichtung aufeinanderfolgender Seitenwände fest gegeneinander gezogen werden, wodurch dann bei diesem Ausführungsbeispiel die horizontalen Stäbe 13 klemmend festgehalten werden. Die randäußeren, vertikalen Stäbe 14 müssen, wie das Ausführungsbeispiel der Figur 10 zeigt, dabei nicht notwendigerweise auch klemmend gehalten werden.

Das äußere Profilschienenteil 16 besitzt mehrere Durchsteckbohrungen 21 für das Drehteil 22 der Spanneinrichtung 18 (Figur 11). Das Drehteil 22 besteht im wesentlichen aus einem Kopf 23 an einem Schaft 24 sowie mindestens einem am freien Schaftende angebrachten, radial vorstehenden Nocken, wobei es beim Ausführungsbeispiel gemäß Figuren 11 und 12 zwei Nocken 25 und 26 sind. Der Schaft kann aus fertigungstechnischen Gründen im mittleren Bereich etwas eingeschnürt sein.

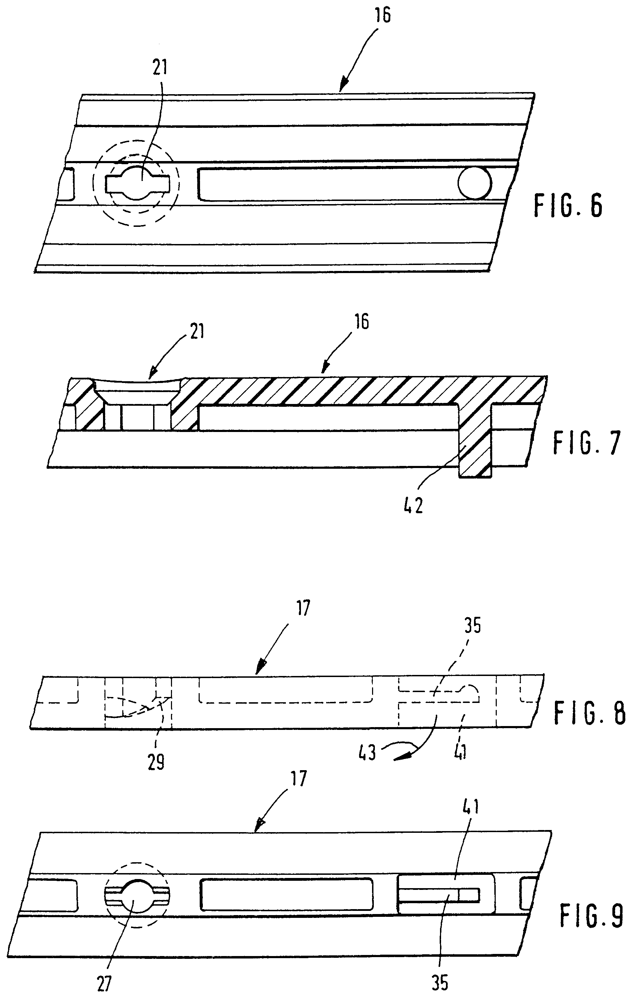

Die Einsteckbohrung 21 hat in ihrem unteren Bereich (Figur 7) einen schlüssellochartigen Querschnitt für einen Schlüssel mit zwei nach entgegengesetzten Richtungen vorstehenden Bärten. Der kreisrunde Teil entspricht in seinem Durchmesser dem Durchmesser des Schafts 24, während die Abmessungen der darin einmündenden radialen Schlitze den größten Abmessungen der Nocken 25 und 26 entsprechen, so daß das untere Ende des Drehteils 22 bequem durch den unteren Bohrungsteil der Durchsteckbohrung 21 austreten kann. Der obere Teil der Durchsteckbohrung 21 entspricht einer normalen angesenkten Bohrung, und er nimmt den entsprechend gestalteten Kopf 23 (Figur 11) des Drehteils 22 auf.

Gemäß Figur 10 wird das aus der Durchsteckbohrung 21 unten austretende Ende des Drehteils 22 - gegebenenfalls nach vorheriger Drehausrichtung - in einen Einsteckschlitz 27 des inneren Profilschienenteils 17 eingesteckt. Seine Form entspricht im wesentlichen der Querschnittsform des unteren Bereichs der Durchsteckbohrung 21, und sie ergibt sich aus Figur 9. Figur 10 entnimmt man, daß sich der äußere Teil des Einsteckschlitzes 27 nach innen hin verjüngt, um dann absatzartig erweitert zu werden, wodurch eine Hinterschneidung 28 entsteht. Die Querschnittsform des äußeren Teils des Einsteckschlitzes 27 entspricht der Querschnittsform des Drehteils 22 im Bereich der Nocken 25 und 26. Sobald sich die Nocken vollständig in diesem äußeren Teil des Einsteckschlitzes 27 befinden, kann das Drehteil 22 nur durch Aufwendung einer entsprechenden Kraft weiter eingedrückt werden, wobei eine federelastische Aufweitung erforderlich ist, damit die beiden Nocken 25 und 26 hindurchtreten und unter die Hinterschneidung 28 gelangen können. Dies ist durch entsprechende Erwärmung des inneren Profilschienenteils 17 möglich, wobei man sich die Erwärmung aus dem Herstellungsprozeß zunutze machen kann. Sobald die Drehteile 22 mit der inneren Profilschiene 17 auf diese Weise druckknopfartig verrastet ist, sind die beiden Profilschienenteile 16 und 17 über die Drehteile 22 unverlierbar zusammengehalten.

An die Hinterschneidungen 28 schließen sich jeweils Wendelflächen 29 (Figur 10) an. Dreht man nach dem Einstecken des Drehglieds 22 dieses in der vorgesehenen Drehrichtung, so gleiten die Stirnflächen 30 und 31 der Nocken 25 und 26 entlang ihrer zugeordneten Wendelfläche 29, was zu einem Heranziehen des inneren Profilschienenteils 17 an das äußere Profilschienenteil 16 im Sinne des Pfeils 32 (Figur 10) zur Folge hat. Dabei verengt sich dann der Spalt 33 zwischen den beiden Profilschienenteilen 16 und 17 von seiner maximalen Weite bei losen Profilschienen 7 bis 10 so stark, daß vorzugsweise die horizontalen Stäbe 13 fest eingespannt werden. In Figur 10 sind die beiden Nocken 25 und 26 in ihrer Ausgangsstellung vor dem Spannen dargestellt. Mit 25a ist die Drehendstellung des Nockens 25 eingezeichnet, die dieser beispielsweise nach einer 90°-Drehung erreicht, bei einer aus dieser Figur ersichtlichen Stärke der horizontalen Stäbe 13. Dünnere horizontale Stäbe erfordern selbstverständlich eine stärkere Drehung, während für dickere Stäbe ein Winkel von weniger als 90° zum Spannen führt. Man kann die Weite des Spalts 33 der losen Profilschienen 7 bis 10 so wählen, daß die Seitenwände nur in Längsrichtung der vertikalen Stäbe 14 in die Profilschienen eingeschoben werden können. Dadurch erhält man bereits mit der Verbindung aller Profilschienen und Seitenwände einen halbwegs stabilen Verband, der sich von alleine nicht auflösen kann. Hierdurch wird die Montage besonders problemlos.

Im übrigen entnimmt man beispielsweise Figur 11, daß der Kopf 23 des Drehteils 22 mit einem Schlitz 34 versehen ist, dessen Form das Einstecken einer Münze erlaubt, so daß das Drehteil mit Hilfe dieser Münze gedreht werden kann. Es kann sich gemäß Figur 11 um einen einfachen Schlitz oder einen Kreuzschlitz handeln.

Damit die beiden Profilschienenteile 16 und 17 nach ihrer Verbindung über die Spanneinrichtungen 18 einen möglichst großen Abstand voneinander haben, so daß die beiden seitlichen Längsspalte 33 ihre maximale Größe aufweisen und dadurch das Einführen der Drahtgitter-Randbereiche 19 und 20 erleichtert wird, sind Spreizfedern 35 bzw. 36 vorgesehen. Die Spreizfedern 35 ergeben sich besonders deutlich aus den Figuren 8 und 9. Figur 13 zeigt eine andere Ausführungsform der Spreizfeder. Diese ist mit 36 bezeichnet. Die Spreizfedern sind, wie nachstehend noch näher beschrieben, so ausgebildet und angebracht, daß sie nach dem Einrasten der Drehteile 22 automatisch gespannt werden und dadurch ihre Spreizwirkung entfalten.

Bei den Spreizfedern handelt es sich jeweils um verschwenkbare Zungen. Sie sind bei den Ausführungsbeispielen einstückig mit ihrem Profilschienenteil hergestellt. Gemäß Figur 13 können die Spreizfedern 36 bügelförmig gestaltet sein, wobei ihr Bügelrücken 37 über die Schienenebene 38 des Profilschienenteils vorsteht. Bei Auftreffen auf eine Gegenfläche - in diesem Fall am Profilschienenteil 17 - wird die Spreizfeder 36 im Sinne des Pfeils 40 ins Innere einer entsprechend dimensionierten Ausnehmung 39 des Profilschienenteils 16 verschwenkt und dabei gespannt.

Die Spreizfedern 35 der Figur 8 befinden sich in unbelastetem Zustand vollständig im Inneren ihrer Ausnehmung 41, welche der Ausnehmung 39 der Figur 13 entspricht. In ungespanntem Zustand sind sie gerade. Auf ihrem verdickten, freien Ende trifft beim Einrasten der Drehteile 22 das freie Ende eines räumlich zugeordneten, in die Ausnehmung 41 eintretenden Betätigungszapfen 42 auf, was zu einem Verbiegen im Sinne des Pfeils 43 führt. In diesem Falle befinden sich die Betätigungszapfen 42 am äußeren Profilschienenteil 16. Durch das Verbiegen werden die Spreizfedern 35 gespannt, und sie drücken dadurch die beiden Profilschienenteile 16 und 17 in der angestrebten Weise auseinander.

Gemäß beispielsweise Figur 10 hat das innere Profilschienenteil 17 einen trapezförmigen Querschnitt, wobei die Ecken an der breiten, im Gebrauch außen liegenden Fläche 44 abgerundet sein können.

Das äußere Profilschienenteil 16 hat einen im wesentlichen C-förmigen Querschnitt. Sein mittlerer Bereich kann aber gemäß Figur 10 verstärkt sein, wobei diese Verstärkung 45 im Querschnitt ebenfalls trapenzförmig ist. Die beiden kleineren Trapezflächen weisen gegeneinander, und sie sind etwa gleich groß. Zwischen dieser Verstärkung 45 und den beiden C-Schenkeln 46 und 47 entstehen Aufnahmen 48 bzw. 49 für die vertikalen Stäbe 14.

Bei den Ausführungsbeispielen bestehen jeweils alle Seitenwände 2 bis 5 aus einem Drahtgitter, welches bevorzugterweise aus vertikalen und horizontalen Stäben aufgebaut ist. Stattdessen kann man die Erfindung gleichermaßen auch ausnutzen, wenn die Seitenwände anders ausgebildet sind, sofern nur ihre Randbereiche dazu geeignet sind, in die Spalträume 33 der Profilschienen eingeschoben und dort klemmend festgehalten werden zu können.

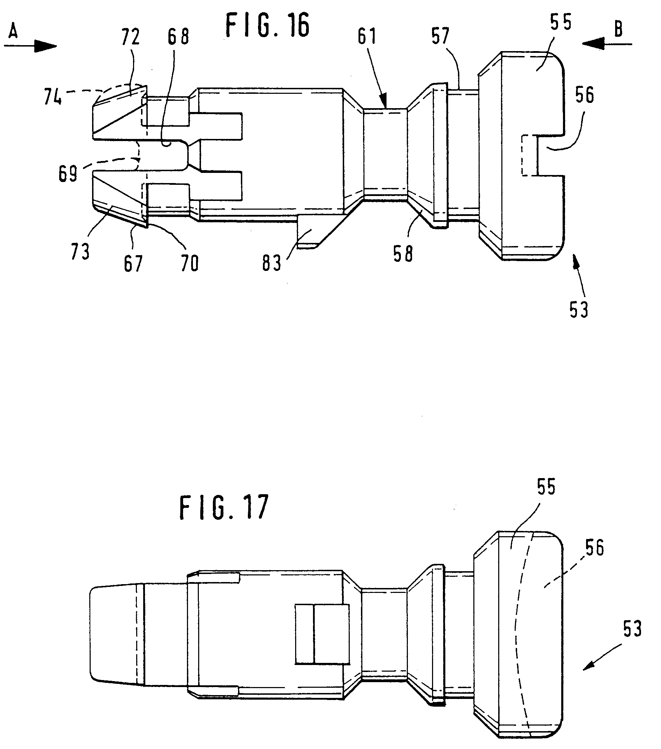

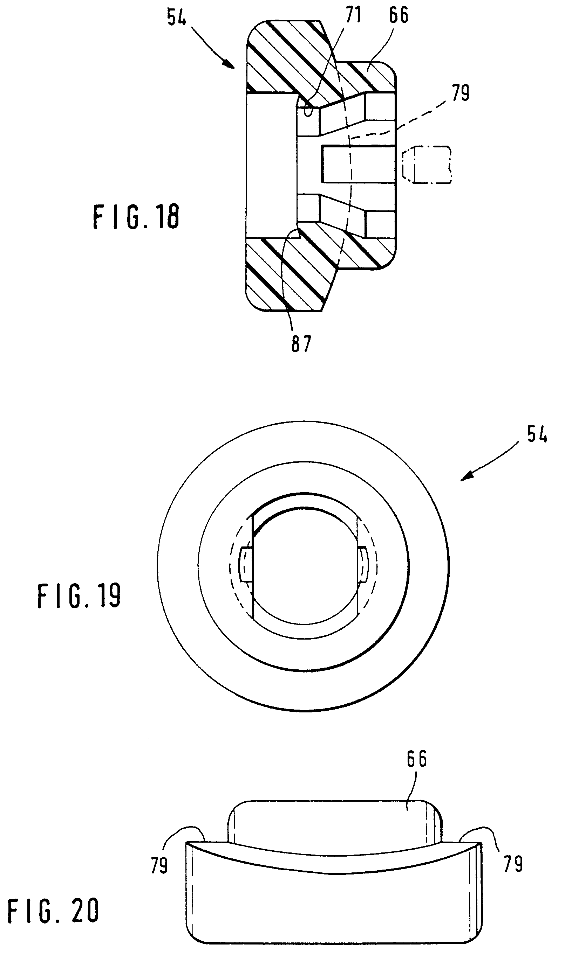

Beim Ausführungsbeispiel der Figuren 14 bis 23 ist jede Spanneinrichtung 50 mit einer Spreizvorrichtung zu einem Betätigungseinheit 51 kombiniert. Ein wesentliches Element dieser Betätigungseinheit ist ein zweiteiliges Drehglied 52, welches aus dem größeren, im wesentlichen bolzenartigen Drehgliedteil 53 (Figuren 16 und 17) und dem kleineren, im wesentlichen ringförmigen Drehgliedteil 54 (Figuren 18-20) besteht. Beide werden rastend oder schnappend miteinander verbunden. Nach ihrer Verbindung sind das äußere Profilschienenteil 16 und das innere Profilschienenteil 17 über die wenigstens eine, vorzugsweise aber mehrere Betätigungseinheiten 51 unverlierbar zusammengehalten. Das Drehglied bzw. dessen größerer, bolzenförmiger Teil 53 besitzt ein im Durchmesser vergrößertes äußeres Ende 55 mit einem Betätigungsschlitz 56, der innen bogenförmig verläuft, so daß das Drehglied mit Hilfe einer Münze gedreht werden kann.

Gleich hinter dem Kopf 55 befindet sich ein Hinterschnitt 57, an welchen sich ein Konus 58 anschließt. Gemäß Figur 14 kann dieser Bereich des größeren Drehglieds 53 mit der Bohrung 59 des äußeren Profilschienenteils 16 druckknopfartig verrasten, wobei zu diesem Zwecke an der Bohrung 59 ein Innenbund 60 angeformt ist, welcher in den Hinterschnitt 57 eintritt. Das Verrasten wird durch den Konus 58 begünstigt. Ein sich an den Konus anschließender verengter Bereich 61 dient zur Aufnahme des zugeordneten horizontalen Stabs 61, der aus einem Gitter bestehenden Käfig-Seitenwand 2. Der zugehörige Vertikalstab 62 des betreffenden Seitenwandendes findet in Analogie zu Figur 10 in der Aufnahme 48 des äußeren Profilschienenteils 16 Platz. Geklemmt werden im Normalfall die horizontalen Säbe 61. Im Sonderfall, d.h. wenn die horizontalen Stäbe dünn sind, kann die Klemmung allein oder zusätzlich am Vertikalstab 62 vorgenommen werden. Dies gilt für alle Ausführungsbeispiele.

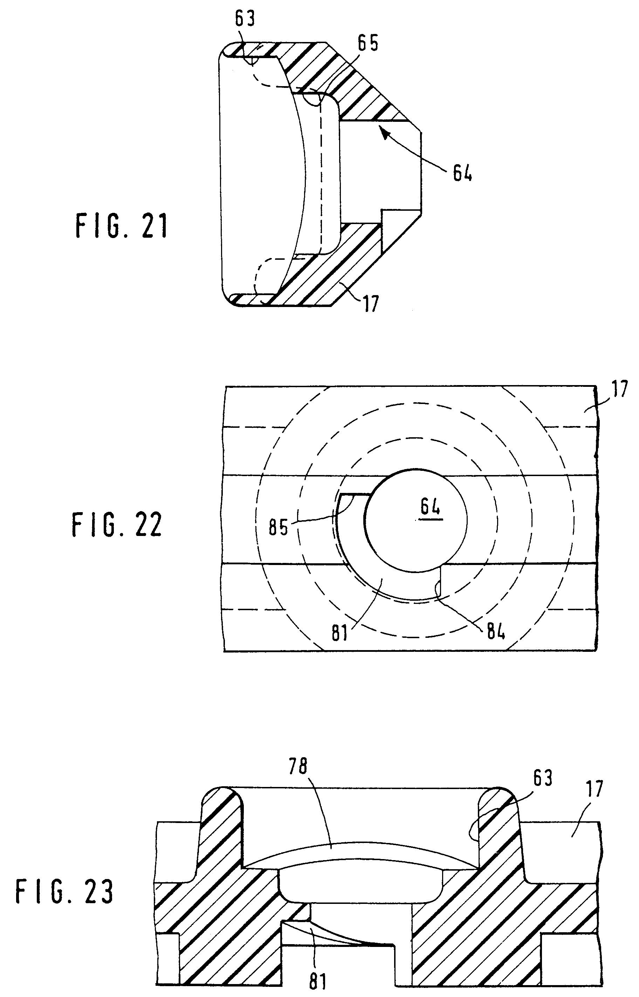

So wie das verdickte äußere Ende 55 des Drehglieds 52 in einer Bohrungserweiterung der Bohrung 59 des äußeren Profilschienenteils 16 versenkt Platz findet, ist auch das kleinere Drehgliedteil 54 versenkt in einer Bohrungserweiterung 63 des inneren Profilschienenteils 17 untergebracht. Die zweimal absatzartig erweiterte Bohrung des inneren Profilschienenteils 17 ist mit 64 bezeichnet (Figur 21). In der inneren Bohrungserweiterung 65 findet der zapfenartige Ansatz 66 des kleineren Drehgliedteils 54 Platz.

Das dem äußeren Ende 55 gegenüberliegende andere Ende des größeren Drehgliedteils 53 ist als sich nach außen verjüngender Konus 67 ausgebildet und mit einem Längsschlitz 68 versehen, d.h. gegabelt. In Figur 16 deutet eine kurze gestrichelte Linie 69 an, daß man zur Erreichung einer größeren Steifigkeit dieses Bereichs den Längsschlitz 68 auch kürzer als dort, mit festen Linien eingezeichnet, ausbilden kann. Eine Schulter 70 hinter dem Konus 67 verrastet gemäß Figur 14 mit einem Innenbund 71 des kleineren Drehgliedteils 54, so daß beide undrehbar und im normalen Gebrauch axial nicht mehr lösbar miteinander verbunden sind. Beim Verrasten federn selbstverständlich die beiden Gabelzinken 72 und 73 federelastisch gegeneinander und anschließend wieder auseinander. Mit einer gestrichelten Linie 74 ist in Figur 16 eine Konusform mit kürzerem, dafür aber flacherem Konus angedeutet. Bei unsachgemäßer Käfigmontage ist ein Lösen der Verrastung möglich, so daß Schäden vermieden werden.

In Figur 14 ist die obere Hälfte des inneren Profilschienenteils 17 in einer Spannstellung und die untere Hälfte dieses Profilschienenteils 17 in einer Freigabestellung gezeichnet, in welcher die Seitenwand 2 bis 5 senkrecht zur Bildebene, beispielsweise von oben nach unten, in den Schlitz 75 eingeschoben werden kann. Geht man von der geöffneten Stellung der Betätigungseinheit 51 aus, so erreicht man durch eine Drehung des Drehglieds 52 in der einen Drehrichtung 76, beispielsweise mit Hilfe einer Münze, ein Zusammenziehen der beiden Profilschienenteile 16 und 17 und damit ein Einspannen des betreffenden Randbereichs der eingeschobenen Seitenwände 2 bis 5. Man erreicht dies in erfindungsgemäßer Weise mit Hilfe einer ersten Drehhubvorrichtung 77. Diese besteht aus wenigstens einem, sich in Umfangsrichtung erstreckenden, axial vorstehenden Hubnocken am Grund der äußeren Bohrungserweiterung 63 des inneren Profilschienenteils 17. Vorzugsweise sind zwei um 180° versetzte Hubnocken 78 vorhanden, zwischen denen sich gewissermaßen zwei Täler befinden. Des weiteren gehört zur ersten Drehhubvorrichtung 77 eine Hub-Gegennocken 79 an der Stirnseite des kleineren Drehgliedteils 54. Gemäß Figur 20 sind auch zwei, um 180° versetzte Hub-Gegennocken 79 vorhanden. Zwischen beiden befindet sich dann auch wiederum je ein Tal, das besonders gut in Figur 20 zu sehen ist.

Bei geöffneter Betätigungseinheit 51 greift jeweils ein Hub-Gegennocken 79 in ein Tal zwischen zwei Hubnocken 78 des inneren Profilschienenteils 17. In der unteren Bildhälfte der Figur 14 sind die aneinander anliegenden Flächen gut zu sehen. Dreht man nun, wie gesagt, das Drehglied 52 im Sinne des Pfeils 76, so wandert jeder Hub-Gegennocken 79 entlang der zugeordneten Stirnfläche am Grund der Bohrungserweiterung 63 bis schließlich nach einer 90°-Drehung jeder Hub-Gegennocken 79 ziemlich genau vor einem Hub-Nocken 78 steht. Dies bewirkt dann, wenn man in Figur 14 von einem festgehaltenen äußeren Profilschienenteil 16 ausgeht, ein axiales Annähern des inneren Profilschienenteils 17 in Pfeilrichtung 80 und damit ein Festklemmen der beiden einander zugekehrten Randbereiche benachbarter, vorzugsweise rechtwinklig zueinander stehender Seitenwände, z.B. der Seitenwände 3 und 4 (Figur 1). Bei diesem Ausführungsbeispiel ist diese 90°-Drehbewegung für das Spannen und Lösen vorgesehen, jedoch kann man auch andere Drehwinkel wählen.

Im Bereich jeder Durchtrittsbohrung 64 des inneren Profilschienenteils 17 für das Drehglied 52 befindet sich an der gegen das äußere Profilschienenteil 16 weisenden Fläche des inneren Profilschienenteils 17 wenigstens eine Wendelfläche 81 (Figur 23) der zweiten Drehhubvorrichtung 82 (Figur 14). Zur zweiten Drehhubvorrichtung 82 gehört noch ein radial vorstehendes Aufgleitglied 83 des Drehglieds 52. Beim Ausführungsbeispiel ist lediglich ein solches Aufgleitglied vorgesehen, jedoch kann man ohne weiteres am Drehglied 52 zwei um 180° versetzte Aufgleitglieder anformen, denen dann je eine Wendelfläche 81 zugeordnet ist.

Die erste Drehhubvorrichtung 77 und die zweite Drehhubvorrichtung 82 sind nun in Drehrichtung derart gegeneinander versetzt, daß bei wirksamer Spanneinrichtung 50, also dann wenn der Hubnocken 78 vor dem Hub-Gegennocken 79 steht, die Spreizvorrichtung 81, 83 in einer unwirksamen Stellung ist. Dies bedeutet, daß sich das Aufgleitglied 83, in axialer Richtung gesehen, am tiefsten Punkt der Wendelfläche 81 befindet. Dies entspricht der Darstellung in der oberen Bildhälfte der Figur 14. Dreht man jedoch das Drehglied 52 in Gegenrichtung, also entgegen dem Pfeil 76, so steigt das Aufgleitglied 83 an der Wendelfläche 81 hoch und drückt dabei den inneren Profilschienenteil 17 entgegen dem Pfeil 80, in Figur 14 von rechts noch links, so daß der Schlitz 52 erweitert wird. Gleichzeitig entfernen sich auch die aneinander anliegenden Spitzen des Hubnockens und des Hub-Gegennockens 79 synchron zu der Aufgleitbewegung. Aus den genannten Gründen ist jeweils eine 90°-Drehbewegung vorgesehen. Aus diesem Grunde erstreckt sich auch, gemäß Figur 22, die Wendelfläche 21 über einen Bereich von etwas mehr als 90°, damit die Mitte des Aufgleitglieds 83 jeweils gegenüber der Längs- oder der Querachse mittig ausgerichtet ist, wenn die eine oder die andere Drehbewegung zu ende ist. Die Begrenzung der Drehbewegungen erreicht man zweckmäßigerweise mit Hilfe zweier Anschlagflächen 84 und 85 an den beiden Enden der Wendelfläche 81 (Figur 22).

Damit das Aufgleitglied 83 die Bohrung 60 des äußeren Profilschienenteils 16 passieren kann, ist, gemäß Figur 15, eine radiale Schlitzerweiterung 86 vorgesehen. An dieser Stelle wird nochmals ausdrücklich betont, daß das Drehglied 52 aufgrund der Verrastung 57, 60 drehbar, aber axial unverschiebbar am äußeren Profilschienenteil 16 gelagert ist.

Es bleibt noch nachzutragen, daß die Verrastfläche für die Schulter 70 oder den Verrastrand des größeren Drehgliedteils 53 gemäß beispielsweise Figur 18 mit 87 bezeichnet ist.

## Patentansprüche

1. Zerlegbarer Käfig, bestehend aus einer Wanne (1), daran mit ihren unteren Enden gehaltenen Seitenwänden (2 bis 5) sowie vorzugsweise einem Deckel (6), wobei die winklig zueinander angeordneten Seitenwände über seitliche Käfigecken bildende Profilschienen (7 bis 10) miteinander verbunden sind und vorzugsweise aus jeweils einem Drahtgitter bestehen, **dadurch gekennzeichnet,** daß die Profilschienen (7 bis 10) in Längsrichtung zweigeteilt sind, wobei der erste Profilschienenteil (z. B. 16) und der zweite Profilschienenteil (17) mittels wenigstens zweier Spanneinrichtungen (18, 50) gegeneinander preßbar sind unter Einschluß der zwischen diese Profilschienenteile greifenden, parallelen Randbereiche (19, 20) benachbarter Seitenwände (2 bis 5), und daß die beiden angepreßten Profilschienenteile mittels zumindest einer Spreizvorrichtung (35,36; 81,83) von den Wand-Randbereichen (19, 20) abhebbar sind.

2. Käfig nach Anspruch 1, dadurch gekennzeichnet, daß die Profilschienenteile (16, 17) und die Spanneinrichtungen (18) unverlierbar zusammengehalten sind.

3. Käfig nach Anspruch 1 oder 2, dadurch gekennzeichnet, daß jede Spreizvorrichtung durch wenigstens eine Spreizfeder (35, 36) gebildet ist und die Profilschienenteile (16, 17) gegen den Widerstand der wenigstens einen Spreizfeder an die Randbereiche (19, 20) der Seitenwände (2 bis 5) anpreßbar sind.

4. Käfig nach wenigstens einem der Ansprüche 1 bis 3, dadurch gekennzeichnet, daß die Spreizfeder (35, 36) einstückig mit ihrem Profilschienenteil (16 oder 17) hergestellt und als verschwenkbare Zungen ausgebildet sind.

5. Käfig nach Anspruch 4, dadurch gekennzeichnet, daß ein Bügelrücken (37) einer bügelförmigen Spreizfeder in unbelastetem Zustand über die Schienenebene (38) vorsteht und federelastisch in eine Ausnehmung (39) des Profilschienenelements (16) einschwenkbar ist.

6. Käfig nach Anspruch 4, dadurch gekennzeichnet, daß sich die Spreizfeder (35) in einer Ausnehmung (41) des im Gebrauch inneren Profilschienenteils (17) befindet und am äußeren Profilschienenteil (16) ein in Spannrichtung weisender Betätigungszapfen (42) angebracht, insbesondere angeformt ist.

7. Käfig nach wenigstens einem der Ansprüche 4 bis 6, dadurch gekennzeichnet, daß das in Gebrauch innere Profilschienenteil (17) einen etwa trapezförmigen Querschnitt und das äußere Profilschienenteil (16) einen im wesentlichen C-förmigen Querschnitt aufweisen.

8. Käfig nach Anspruch 7, dadurch gekennzeichnet, daß der mittlere Bereich des C-Querschnitts innen verstärkt ist, wobei der Querschnitt der Verstärkung (45) etwa trapezförmig ist.

9. Käfig nach Anspruch 7 oder 8, dadurch gekennzeichnet, daß jede Spanneinrichtung (18) aus einem einen Schaft (24) sowie einen Kopf (23) aufweisenden Drehteil (22) mit wenigstens einem radial vorstehenden Nocken (25, 26) am freien Schaftende sowie einer wendelförmigen Aufgleitfläche (29) für jeden Nocken am inneren Profilschienenteil (17) besteht, die vom äußeren Profilschienenteil (16) wegweist und von ihrem Nocken (25, 26) untergriffen wird.

10. Käfig nach Anspruch 9, dadurch gekennzeichnet, daß der Schaft (24) des Drehteils (22) der Spanneinrichtung (18) einen kreisrunden Querschnitt aufweist und sich an dessen freiem Ende zwei um 180° versetzte, radial vorstehende Nocken (25, 26) befinden, die sich in Einsteckrichtung verjüngen, und daß sich die Einsteckschlitze (27) des inneren Profilschienenteils (17) für die Nocken (25, 26) in gleicher Weise verjüngen, so daß die federelastisch eingepreßten Nocken (25, 26) ihre Einsteckschlitze (27) widerhakenartig untergreifen.

11. Käfig nach Anspruch 10, dadurch gekennzeichnet, daß jede wendelförmige Aufgleitfläche (29) stetig in die Abstützfläche (28) für den eingerasteten Nocken (25, 26) übergeht.

12. Käfig nach wenigstens einem der Ansprüche 9 bis 11, dadurch gekennzeichnet, daß der Kopf (23) des Drehteils (22) wenigstens teilweise von einer Aufnahme an der Außenfläche des äußeren Profilschienenteils (16) aufgenommen ist.

13. Käfig nach wenigstens einem der Ansprüche 9 bis 12, dadurch gekennzeichnet, daß die Nocken (25, 26) im inneren Profilschienenteil (17) versenkt untergebracht sind.

14. Käfig nach wenigstens einem der Ansprüche 9 bis 13, dadurch gekennzeichnet, daß der Kopf (23) des Drehteils (22) mit einem Schlitz für ein Betätigungselement, insbesondere für eine Münze, versehen ist.

15. Käfig nach wenigstens einem der Ansprüche 1 bis 14, dadurch gekennzeichnet, daß die Seitenwände (2 bis 5) mittels insbesondere schwenkbarer Halteklammern oder dergleichen Verschlußelementen (12) mit der Wanne (1), insbesondere einem die unteren Seitenwandenden aufnehmenden seitlich vorstehenden oberen Wannenrand (11) verbindbar sind.

16. Käfig nach wenigstens einem der Ansprüche 1 bis 15, dadurch gekennzeichnet, daß der Deckel (6) schwenkbar (15) an einer der Wände (2 bis 5), insbesondere einer Längswand (4) angelenkt ist.

17. Käfig nach Anspruch 1 oder wenigstens einem der Ansprüche 2, 7, 8, 14 oder 16, dadurch gekennzeichnet, daß jede Spreizvorrichtung (81, 83) mit einer der Spanneinrichtungen (50) eine Betätigungseinheit (51) mit einem beide Profilschienenteile (16, 17) quer durchsetzenden, begrenzt drehbaren Drehglied (52) bildet, wobei das Drehglied am einen, insbesondere am äußeren Profilschienenteil (16) drehbar aber axial unverschiebbar gelagert ist und zwischen des Drehglied (52) und das andere Profilschienenteil (17) zwei gegenläufig wirkende Drehhubvorrichtungen (77, 82) mit in Drehrichtung (76) versetzten Wirkstellungen geschaltet sind, wobei die erste Drehhubvorrichtung (77) bei einer Drehung des Drehglieds (52) in der einen Drehrichtung (76) oder einer ersten Teildrehung die beiden Profilschienenteile (16, 17) zusammenzieht und die zweite Drehhubvorrichtung (82) bei einer Drehbewegung in der Gegenrichtung die Profilschienenteile (16, 17) auseinanderdrückt.

18. Käfig nach Anspruch 17, dadurch gekennzeichnet, daß sich im Bereich einer Durchtrittsbohrung (63) für das Drehglied (52) an der vom äußeren Profilschienenteil (16) wegweisenden Fläche des inneren Profilschienenteils (7) wenigstens ein sich in Umfangsrichtung erstreckender, axial vorstehender Hubnocken (78) oder dergleichen der ersten Drehhubvorrichtung (77) befindet und das Drehglied (52) wenigstens einen Hub-Gegennocken (79) oder dergleichen aufweist, wobei etwa bei einer Anlage der Spitze des Gegennockens (79) an der derjenigen des Hubnockens 78 die Spannstellung der Spannvorichtung (50) erreicht ist.

19. Käfig nach Anspruch 17 oder 18, dadurch gekennzeichnet, daß sich im Bereich der Durchtrittsbohrung (64) für das Drehglied (52) an der gegen das äußere Profilschienenteil (16) weisenden Fläche des inneren Profilschienenteils (17) wenigstens eine Wendelfläche (81) oder dergleichen der zweiten Drehhubvorrichtung (82) befindet, die mit einem radial vorstehenden Aufgleitglied (83) des Drehglieds (52) in Aufspreizrichtung der Profilschienenteile (16, 17) zusammenwirkt.

20. Käfig nach wenigstens einem der Ansprüche 17 bis 19, dadurch gekennzeichnet, daß die wirksamen Drehstellungen der beiden Drehhubvorrichtungen (77, 82) um ca. 90° gegeneinander versetzt sind.

21. Käfig nach wenigstens einem der Ansprüche 18 bis 20, dadurch gekennzeichnet, daß sich am inneren Profilschienenteil (17) zwei um 180° versetzte Hubnocken (78) und am Drehglied (52) zwei ebenfalls um 180° versetzte Hub-Gegennocken (79) befinden.

22. Käfig nach wenigstens einem der Ansprüche 18 bis 21, dadurch gekennzeichnet, daß die Form des Hubnockens (78) im wesentlichen derjenigen des Hub-Gegennockens (79) entspricht und sich jeder Nocken etwa über 90° erstreckt.

23. Käfig nach wenigstens einem der Ansprüche 19 bis 22, dadurch gekennzeichnet, daß sich die Wendelfläche (81) der zweiten Drehhubvorrichtung (82) über wenigstens etwa 90° erstreckt.

24. Käfig nach wenigstens einem der Ansprüche 17 bis 23, dadurch gekennzeichnet, daß das Drehglied (52), insbesondere im Bereich seines im Durchmesser vergrößerten äußeren Endes (55), in der Art eines Druckknopfes federelastisch mit dem äußeren Profilschienenteil (16) verrastet ist.

25. Käfig nach wenigstens einem der Ansprüche 17 bis 24, dadurch gekennzeichnet, daß das Drehglied (52) zweiteilig ausgebildet ist, wobei die beiden Teilstücke (53, 54) druckknopfartig miteinander verrastet sind.

26. Käfig nach Anspruch 25, dadurch gekennzeichnet, daß sich der wenigstens eine Hub-Gegennocken (79) der ersten Drehhubvorrichtung (77) am kleineren, ringförmigen Drehgliedteil (54) befindet.

27. Käfig nach Anspruch 25, dadurch gekennzeichnet, daß sich der wenigstens eine Hub-Gegennocken (79) der ersten Drehhubvorrichtung (77) an der Innenseite des kleineren Drehgliedteils (54) befindet und die Außenseite des letzteren eine insbesondere vertieft angeordnete Verrastfläche für einen Verrastrand (70) des gegabelten Einsteckendes des größeren Drehgliedteils (53) aufweist.

28. Käfig nach Anspruch 26 oder 27, gekennzeichnet durch eine wenigstens teilweise versenkte Anordnung des kleineren Drehgliedteils (54) in einer Bohrungserweiterung des inneren Profilschienenteils (17).

29. Käfig nach wenigstens einem der Ansprüche 19 bis 28, dadurch gekennzeichnet, daß das radial vorstehende Aufgleitglied (83) des Drehglieds (52) zugleich ein Drehanschlagglied bildet und sich an jedem Ende der Wendelfläche (81) des inneren Profilschienenteils (17) eine Anschlagfläche (84, 85) für das Drehanschlagglied (83) befindet.

## Claims

1. Collapsible cage comprising a base trough (1), side walls (2 to 5) which are held thereto with their lower ends and preferably a cover (6), wherein the side walls which are arranged at an angle to each other are connected together by way of shaped bars (7 to 10) forming lateral cage corners and preferably each comprise a wire grid, characterised in that the shaped bars (7 to 10) are divided into two in the longitudinal direction, wherein the first shaped bar portion (for example 16) and the second shaped bar portion (17) can be pressed against each other by means of at least two clamping devices (18, 50), enclosing the parallel edge regions (19, 20) of adjacent side walls (2 to 5), which edge regions engage between said shaped bar portions, and that the two shaped bar portions which are pressed against each other can be lifted off the wall edge regions (19, 20) by means of at least one spreading device (35, 36; 81, 83).

2. A cage according to claim 1 characterised in that the shaped bar portions (16, 17) and the clamping devices (18) are non-losably held together.

3. A cage according to claim 1 or claim 2 characterised in that each spreading device is formed by at least one spreading spring (35, 36) and the shaped bar portions (16, 17) can be pressed against the edge regions (19, 20) of the side walls (2 to 5) against the resistance of the at least one spreading spring.

4. A cage according to at least one of claim 1 to 3 characterised in that the spreading springs (35, 36) are produced integrally with their shaped bar portion (16 or 17) and are in the form of pivotable tongues.

5. A cage according to claim 4 characterised in that the back (37) of a curved spreading spring projects in the unloaded condition beyond the plane (38) of the bars and can be resiliently pivoted into an opening (39) in the shaped bar element (16).

6. A cage according to claim 4 characterised in that the spreading spring (35) is disposed in an opening (41) of the shaped bar portion (17) which in use is the inner one and an actuating projection (42) which faces in the clamping direction is provided, in particular moulded, on the outer shaped bar portion (16).

7. A cage according to at least one of claims 4 to 6 characterised in that the shaped bar portion (17) which in use is the inner one is of an approximately trapezoidal cross-section and the outer shaped bar portion (16) is of a substantially C-shaped cross-section.

8. A cage according to claim 7 characterised in that the central region of the C-shaped cross-section is reinforced at the inside, the cross-section of the reinforcement (45) being approximately trapezoidal.

9. A cage according to claim 7 or claim 8 characterised in that each clamping device (18) comprises a rotary member (22) having a shank (24) and a head (23) and with at least one radially projecting projection portion (25, 26) at the free end of the shank and a helical sliding surface (29) for each projection portion on the inner shaped bar portion (17), which faces away from the outer shaped bar portion (16) and under which the projection portions (25, 26) thereof engage.

10. A cage according to claim 9 characterised in that the shank (24) of the rotary member (22) of the clamping device (18) is of a round cross-section and disposed at the free end thereof are two radially projecting projection portions (25, 26) which are displaced through 180° and which decrease in the insertion direction, and that the insertion slots (27) of the inner shaped bar portion (17) for the projection portions (25, 26) decrease in the same member so that the projection portions (25, 26) when resiliently pressed in engage barb-like under their insertion slots (27).

11. A cage according to claim 10 characterised in that each helical sliding surface (29) progressively blends into the support surface (28) for the projection portions (25, 26) when engaged.

12. A cage according to at least one of claim 9 to 11 characterised in that the head (23) of the rotary member (22) is at least partially received by a receiving means at the outside surface of the outer shaped bar portion (16).

13. A cage according to at least one of claim 9 to 12 characterised in that the projection portions (25, 26) are disposed in sunk relationship in the inner shaped bar portion (17).

14. A cage according to at least one of claim 9 to 13 characterised in that the head (23) of the rotary member (22) is provided with a slot for an actuating element, in particular for a coin.

15. A cage according to at least one of claim 1 to 14 characterised in that the side walls (2 to 5) can be connected to the base trough (1), in particular a laterally projecting upper base trough edge (11) which receives the lower side wall ends, by bans of in particular pivotable holding clips or the like fastener elements (12).

16. A cage according to at least one of claim 1 to 15 characterised in that the cover (6) is connected pivotably (15) to one of the walls (2 to 5), in particular a longitudinal wall (4).

17. A cage according to claim 1 or at least one of claims 2, 7, 8, 14 or 16 characterised in that each spreading device (81, 83) with one of the clamping devices (50) forms an actuating unit (51) with a limitedly rotatable rotary element (52) which passes transversely through both shaped bar portions (16, 17), wherein the rotary element is rotatably but axially immovably mounted on a shaped bar portion (16), in particular on the outer one, and two oppositely acting rotary stroke devices (77, 82) with operative positions which are displaced in the direction of rotation (76) are connected between the rotary element (52) and the other shaped bar portion (17), wherein the first rotary stroke device (77), upon a rotary movement of the rotary element (52) in the one rotary direction (76) or a first partial rotary movement, pulls the two shaped bar portions (16, 17) together and the second rotary stroke device (82), upon a rotary movement in the opposite direction, urges the shaped bar portions (16, 17) away from each other.

18. A cage according to claim 17 characterised in that at least one peripherally extending, axially projecting stroke cam (78) or the like of the first rotary stroke device (77) is disposed in the region of a through bore (63) for the rotary element (52) at the surface of the inner shaped bar portion (7), which faces away from the outer shaped bar portion (16), and the rotary element (52) has at least one counterpart stroke cam (79) or the like, wherein the clamping position of the clamping device (50) is reached approximately when the peak of the counterpart cam (79) bears against that of the stroke cam (78).

19. A cage according to claim 17 or claim 18 characterised in that disposed in the region of the through bore (64) for the rotary element (52) at the surface of the inner shaped bar portion (17) which faces towards the outer shaped bar portion (16) is at least one helical surface (81) or the like of the second rotary stroke device (82), which co-operates with a radially projecting sliding member (83) of the rotary element (52) in the spreading-open direction of the shaped bar portions (16, 17).

20. A cage according to at least one of claims 17 to 19 characterised in that the operative rotary positions of the two rotary stroke devices (77, 82) are displaced relative to each other through about 90°.

21. A cage according to at least one of claims 18 to 20 characterised in that disposed on the inner shaped bar portion (17) are two stroke cams (78) which are displaced through 180° and disposed on the rotary element (52) are two counterpart stroke cams (79) which are also displaced through 180°.

22. A cage according to at least one of claims 18 to 21 characterised in that the shape of the stroke cam (78) substantially corresponds to that of the counterpart stroke cam (79) and each cam extends approximately over 90°.

23. A cage according to at least one of claims 19 to 22 characterised in that the helical surface (81) of the second rotary stroke device (82) extends over at least approximately 90°.

24. A cage according to at least one of claims 17 to 23 characterised in that particularly in the region of its outer end (55) which is of enlarged diameter, the rotary element (52) is resiliently engaged with the outer shaped bar portion (16) in the manner of a press stud.

25. A cage according to at least one of claims 17 to 24 characterised in that the rotary member (52) is of a two-part configuration, wherein the two parts (53, 54) are engaged together in a press stud-like manner.

26. A cage according to claim 25 characterised in that the at least one counterpart stroke cam (79) of the first rotary stroke device (77) is on the smaller annular rotary element portion (54).

27. A cage according to claim 25 characterised in that the at least one counterpart stroke cam (79) of the first rotary stroke device (77) is at the inside of the smaller rotary element portion (54) and the outside of the latter has an engaging surface, which is arranged in particular in recessed relationship, for an engaging edge (70) of the forked insertion end of the larger rotary element portion (53).

28. A cage according to claim 26 or claim 27 characterised by an at least partially recessed arrangement of the smaller rotary element portion (54) in a bore enlargement in the inner shaped bar portion (17).

29. A cage according to at least one of claim 19 to 28 characterised in that the radially projecting sliding member (83) of the rotary element (52) forms at the same time a rotary abutment member and disposed at each end of the helical surface (81) of the inner shaped bar portion (17) is an abutment surface (84, 85) for the rotary abutment member (83).

## Revendications

1. Cage démontable, comprenant un bac (1), contre lequel sont fixées les extrémités inférieures des parois latérales (2 à 5), ainsi que, de préférence, un couvercle (6), les parois latérales, perpendiculaires les unes aux autres, étant assemblées les unes aux autres par des rails profilés (7 à 10), qui forment les angles latéraux de la cage, et étant constituées de préférence par une grille en fil de fer, caractérisée en ce que les rails profilés (7 à 10) sont divisés en deux parties dans le sens longitudinal, la première partie (par exemple, 16) du rail profilé et la deuxième partie (17) du rail profilé pouvant être serrées l'une contre l'autre à l'aide d'au moins deux dispositifs de serrage (18, 50) en incluant les bords (19, 20) parallèles des parois latérales (2 à 5) voisines, qui s'engagent entre ces parties du rail profilé, et en ce que les deux parties du rail profilé, serrées l'une contre l'autre, peuvent être détachées des bords (19, 20) des parois à l'aide d'au moins un mandrin expansible (35, 36 ; 81, 83).

2. Cage selon la revendication 1, caractérisée en ce que les parties (16, 17) du rail profilé et les dispositifs de serrage (18) sont maintenus les uns contre les autres de manière imperdable.

3. Cage selon la revendication 1 ou 2, caractérisée en ce que chaque mandrin expansible est formé d'au moins un ressort écarteur (35, 36) et les parties (16, 17) du rail profilé peuvent être serrées contre les bords (19, 20) des parois latérales (2 à 5) dans le sens inverse de l'effort exercé par au moins un ressort écarteur.

4. Cage selon l'une quelconque des revendications 1 à 3, caractérisée en ce que les ressorts écarteurs (35, 36) sont fabriqués d'une seule pièce avec la partie (16, 17) du rail profilé correspondante et sont conçus comme des lames pivotantes.

5. Cage selon la revendication 4, caractérisée en ce que la partie dorsale (37) de la traverse d'un ressort en forme d'étrier s'étend en saillie sans contrainte au-dessus du plan (38) du rail et peut s'engager de manière élastique dans un évidement (39) de l'élément (16) du rail profilé.

6. Cage selon la revendication 4, caractérisée en ce que le ressort écarteur (35) se situe à l'intérieur d'un évidement (41) de la partie intérieure (17) du rail profilé, considérée à l'état monté, et en ce qu'un pivot de man_uvre (42), orienté dans le sens du serrage, est fixé sur la partie extérieure (16) du rail profilé, en particulier formé avec cette dernière.

7. Cage selon l'une quelconque des revendications 4 à 6, caractérisée en ce que la partie intérieure (17) du rail profilé, considérée à l'état monté, présente une section en forme de trapèze et la partie extérieure (16) du rail profilé une section sensiblement en forme de C.

8. Cage selon la revendication 7, caractérisée en ce que la zone médiane de la section en C est renforcée à l'intérieur, la section du renforcement (45) étant sensiblement en forme de trapèze.

9. Cage selon la revendication 7 ou 8, caractérisée en ce que chaque dispositif de serrage (18) est constitué par une partie rotative (22), formée d'une tige (24), ainsi que d'une tête (23), comprenant au moins une came (25, 26), en saillie dans le sens radial, sur l'extrémité libre de la tige, ainsi que par une surface de frottement hélicoïdale (29) pour chaque came, qui est réalisée sur la partie intérieure (17) du rail profilé et orientée à l'opposé de la partie extérieure (16) du rail profilé et sous laquelle s'engage la came (25, 26) correspondante.

10. Cage selon la revendication 9, caractérisée en ce que la tige (24) de la partie rotative (22) du dispositif de serrage (18) présente une section arrondie et comprend, sur son extrémité libre, deux cames (25, 26), en saillie dans le sens radial et décalées de 180°, qui se rétrécissent dans le sens d'emboîtement, et en ce que les fentes d'emboîtement (27) de la partie intérieure (17) du rail profilé, destinées à recevoir les cames (25, 26), se rétrécissent de la même manière, de telle sorte que les cames (25, 26), enfoncées de manière élastique, s'engagent sous la fente d'emboîtement (27) correspondante à l'inverse de la forme d'un crochet.

11. Cage selon la revendication 10, caractérisée en ce que chaque surface de frottement hélicoïdale (29) passe progressivement dans la surface d'appui (28) pour la came (25, 26) enclenchée.

12. Cage selon l'une quelconque des revendications 9 à 11, caractérisée en ce que la tête (23) de la partie rotative (22) s'engage au moins partiellement dans un logement réalisé sur la surface extérieure de la partie extérieure (16) du rail profilé.

13. Cage selon l'une quelconque des revendications 9 à 12, caractérisée en ce que les cames (25, 26) sont encastrées dans la partie intérieure (17) du rail profilé.

14. Cage selon l'une quelconque des revendications 9 à 13, caractérisée en ce que la tête (23) de la partie rotative (22) est munie d'une fente destinée à recevoir un élément de man_uvre, en particulier une pièce de monnaie.

15. Cage selon l'une quelconque des revendications 1 à 14, caractérisée en ce que les parois latérales (2 à 5) peuvent être assemblées, par l'intermédiaire d'éléments de fermeture (12), en particulier des étriers de retenue, avec le bac (1), en particulier avec un bord supérieur (11) du bac, latéralement en saillie, qui reçoit les extrémités inférieures des parois latérales.

16. Cage selon l'une quelconque des revendications 1 à 15, caractérisée en ce que le couvercle (6) est raccordé à l'une des parois (2 à 5), en particulier une paroi longitudinale (4), de manière à pouvoir pivoter (15).

17. Cage selon la revendication 1 ou selon au moins l'une quelconque des revendications 2, 7, 8, 14 ou 16, caractérisée en ce que chaque mandrin expansible (81, 83) forme avec l'un des dispositifs de serrage (50) une unité de man_uvre (51) comprenant un organe de rotation (52) à rotation limitée, qui traverse transversalement les deux parties (16, 17) du rail profilé, l'organe de rotation étant logé sur une partie du rail profilé, en particulier sur la partie extérieure (16) du rail profilé, de manière à pouvoir pivoter, mais non pas se déplacer dans le sens axial, et en ce que deux dispositifs de pivotement et levage (77, 82), à action contraire, avec des positions d'action décalées dans le sens de la rotation (76), sont raccordés entre l'organe de rotation (52) et l'autre partie (17) du rail profilé, le premier dispositif de pivotement et levage (77) étant destiné à assembler les deux parties (16, 17) du rail profilé lors d'une rotation de l'élément de rotation (52) dans le sens de la rotation (76) ou lors d'une première rotation partielle, et le deuxième dispositif de pivotement et levage (82) étant destiné à écarter les deux parties (16, 17) du rail profilé lors d'un mouvement de rotation dans le sens inverse de la rotation.

18. Cage selon la revendication 17, caractérisée en ce que, dans la zone d'un trou traversant (63) pour l'organe de rotation (52), réalisée sur une surface de la partie intérieure (17) du rail profilé, opposée à la partie extérieure (16) du rail profilé, est disposée au moins une came de levage (78) ou analogue du premier dispositif de pivotement et levage (77), qui est en saillie dans le sens axial, et qui se prolonge dans le sens de rotation, et en ce que l'organe de rotation (52) présente au moins une came de levage antagoniste (79) ou analogue, le dispositif de serrage (50) ayant atteint sa position de serrage lorsque la pointe de la came antagoniste (79) repose pratiquement contre la pointe de la came de levage (78).

19. Cage selon la revendication 17 ou 18, caractérisée en ce que, dans la zone du trou traversant (64) pour l'organe de rotation (52), réalisée sur une surface de la partie intérieure (17) du rail profilé, opposée à la partie extérieure (16) du rail profilé, est disposée au moins une surface hélicoïdale (81) ou analogue du deuxième dispositif de pivotement et levage (82), qui agit conjointement avec un organe de frottement (83), en saillie dans le sens axial, de l'organe de rotation (52) dans le sens d'écartement des parties (16, 17) du rail profilé.

20. Cage selon l'une quelconque des revendications 17 à 19, caractérisée en ce que les positions de rotation actives des deux dispositifs de pivotement et levage (77, 82) sont décalées l'une par rapport à l'autre de 90° environ.

21. Cage selon l'une quelconque des revendications 18 à 20, caractérisée en ce que deux cames de levage (78), décalées de 180°, sont disposées sur la partie intérieure (17) du rail profilé et deux cames de levage antagonistes (79), également décalées de 180°, sont montées sur l'organe de rotation (52).

22. Cage selon l'une quelconque des revendications 18 à 21, caractérisée en ce que la forme de la came de levage (78) correspond sensiblement à celle de la came de levage antagoniste (79) et chaque came s'étend sur environ 90°.

23. Cage selon l'une quelconque des revendications 19 à 22, caractérisée en ce que la surface hélicoïdale (81) du deuxième dispositif de pivotement et levage (82) s'étend au moins sur 90° environ.

24. Cage selon l'une quelconque des revendications 17 à 23, caractérisée en ce que l'organe de rotation (52), en particulier dans la zone d'une extrémité extérieure (55) au diamètre agrandi, est bloqué de manière élastique avec la partie extérieure (16) du rail profilé à la manière d'un bouton de pression.

25. Cage selon l'une quelconque des revendications 17 à 24, caractérisée en ce que l'organe de rotation (52) est formé de deux parties, les deux parties (53, 54) étant bloquées l'une contre l'autre comme un bouton de pression.

26. Cage selon la revendication 25, caractérisée en ce qu'au moins l'une des cames de levage antagonistes (79) du premier dispositif de pivotement et levage (77) est montée sur la plus petite partie (54) en forme d'anneau de l'organe de rotation.

27. Cage selon la revendication 25, caractérisée en ce qu'au moins l'une des cames de levage antagonistes (79) du premier dispositif de pivotement et levage (77) est montée sur la face intérieure de la plus petite partie (54) de l'organe de rotation et en ce que la face extérieure de ce dernier présente une surface d'ancrage, disposée en particulier en retrait, destinée à recevoir un bord d'ancrage (70) de l'extrémité d'emboîtement en forme de fourche de la plus grande partie (53) de l'organe de rotation.

28. Cage selon la revendication 26 ou 27, caractérisée par au moins une disposition partiellement encastrée de la plus petite partie (54) de l'organe de rotation dans un évasement du trou traversant de la partie intérieure (17) du rail profilé.

29. Cage selon l'une quelconque des revendications 19 à 28, caractérisée en ce que la surface de frottement (83) de l'organe de rotation (52), en saillie dans le sens radial, forme en même temps un organe d'arrêt rotatif et en ce qu'une surface d'arrêt (84, 85) pour l'organe d'arrêt rotatif (83) se situe à chaque extrémité de la surface hélicoïdale (81) de la partie intérieure (17) du rail profilé.
